(19) **Europäisches Patentamt / European Patent Office / Office européen des brevets**

(11) **EP 2 709 329 B1**

(12) **EUROPEAN PATENT SPECIFICATION**

(45) Date of publication and mention
of the grant of the patent:
**28.03.2018 Bulletin 2018/13**

(51) Int Cl.:
**H04L 27/233** $^{(2006.01)}$

(21) Application number: **12782536.2**

(22) Date of filing: **17.02.2012**

(86) International application number:
**PCT/JP2012/053793**

(87) International publication number:
**WO 2012/153556 (15.11.2012 Gazette 2012/46)**

(54) **Device and corresponding method for differential demodulation**

Vorrichtung und Verfahren zur differentiellen Demodulation

Dispositif et procédé de démodulation différentielle

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.05.2011 JP 2011106274**

(43) Date of publication of application:
**19.03.2014 Bulletin 2014/12**

(73) Proprietor: **Mitsubishi Electric Corporation**
**Tokyo 100-8310 (JP)**

(72) Inventors:
• **IMAO Masataka**
**Tokyo 100-8310 (JP)**
• **SUZUKI Hiroshi**
**Tokyo 100-8310 (JP)**

(74) Representative: **Hoffmann Eitle**
**Patent- und Rechtsanwälte PartmbB**
**Arabellastraße 30**
**81925 München (DE)**

(56) References cited:
**EP-A2- 0 860 964     JP-A- 6 177 926**
**JP-A- 7 183 831     JP-A- 2000 013 353**

• **FUMIYUKI ADACHI: "Adaptive Differential Detection Using Linear Prediction for -ary DPSK", IEEE TRANSACTIONS ON VEHICULAR TECHNOLOGY, vol. 47, no. 3, 1 August 1998 (1998-08-01) , XP011063716, NJ, US ISSN: 0018-9545**

## Description

### TECHNICAL FIELD

The present invention relates to a differential demodulation device and a differential demodulation method.

### BACKGROUND ART

A problem in wireless communication systems that employ digital angular modulation is that the quality of the signal reaching the receiver can easily be degraded by multipath fading due to radio wave interference and sharp fluctuations in channel conditions due to motion. In addition, the reliability of the demodulated signal is low in weak electric field environments because the noise power rivals the received signal power.

When QPSK (Quadrature Phase Shift Keying) is employed as the digital angular modulation scheme, for example, the received signal is generally demodulated by comparison with an absolute phase reference established on the phase plane. A problem is that when there is a large phase rotation of the received signal due to radio wave interference, motion, or thermal noise, accurate demodulation becomes theoretically impossible.

DQPSK (Differential Quadrature Phase Shift Keying), which uses the phase difference in a QPSK signal to generate a new modulated signal, is widely and generally employed to mitigate the degradation of receiving performance caused by this problem.

In DQPSK, the demodulated signal is generated by use of the phase difference between the signal received at a given time and the signal received immediately before the given time, so demodulation can be accurate even in an environment in which a fixed phase rotation is equally added to the received signal, i.e., a multipath fading environment. DQPSK enables accurate demodulation, with practically no influence of phase rotation, to be carried out even in a mobile reception environment in which the amount of phase rotation fluctuates with time, provided the rate of fluctuation is sufficiently less than the signal transmission rate.

The signal received at a given time and the signal received immediately before the given time are both ordinarily affected by thermal noise, however, so there is the problem that the bit error rate in DQPSK is inferior to that of a QPSK signal which uses an absolute phase reference. This is shown in, for example, Yoichi Saito, Dejitaru Musen Tsushin no Henpukucho (Modulation and demodulation in digital wireless communication), Corona, February 1996, pp. 233-242.

A contrasting technique disclosed in JP 5-176007 A improves demodulation accuracy by estimating, from the signal received at the present time, the positions of all possible signal points that might appear in the digital phase modulation system being used and using the one signal point among the estimated signal points that is closest to the signal point of the signal received next.

### PRIOR ART REFERENCES

### PATENT REFERENCE

(1): Japanese Patent Application Publication No. 5-176007 (paragraph 0007, Fig. 1)

### NON-PATENT REFERENCES

(1): Yoichi Saito, Dejitaru Musen Tsushin no Henpukucho (Modulation and demodulation in digital wireless communication), Corona, February 1996, pp. 233-242
(2): Fumiyuki Adachi, "Adaptive Differential Detection Using Linear Prediction for M-ary DPSK", IEEE TRANSACTIONS ON VEHICLUAR TECHNOLOGY, vo. 47, no. 3, 1 August 1998 (1998-08-01)

### SUMMARY OF THE INVENTION

### PROBLEMS TO BE SOLVED BY THE INVENTION

The technique described in Patent Reference 1 may fail to improve demodulation accuracy in a very noisy environment dominated by random amplitude and phase fluctuations due to noise, because the amount of phase rotation is estimated and compensated for by using only the signals received at a given instant and the next instant.

Furthermore, in the technique described in Patent Reference 1, the reliability of the received signal is reduced in an environment in which the amount of phase rotation varies with time and varies at a rate that is comparable to the signal transmission rate, because then the demodulated signal can easily be affected by phase rotation.

It is therefore an object of the present invention to improve the reliability of the demodulated signal even in a channel environment in which the amplitude and phase of the received signal vary from one instant to the next and in an unfavorable channel environment in which the noise power rivals the received signal power.

## MEANS FOR SOLVING THE PROBLEM

A differential demodulation device according to one aspect of the invention is described in claim 1, while a differential demodulation method is described in claim 8. Advantageous embodiments are described in the dependent claims. The present invention is defined and limited only by the scope of the appended claims. In the following, any embodiment(s) referred to and not falling within the scope of said appended claims is (are) to be interpreted as example(s) useful for understanding the present invention.

## EFFECT OF THE INVENTION

According to one aspect of the invention, the reliability of the demodulated signal can be improved even in a channel environment in which the amplitude and phase of the received signal vary from one instant to the next and in an unfavorable channel environment in which the noise power rivals the received signal power.

## BRIEF DESCRIPTION OF THE DRAWINGS

FIG. 1 is a block diagram schematically showing the structure of a differential demodulation device according to a first embodiment.
FIG. 2 is a schematic diagram showing examples of a first physical quantity and a second physical quantity in the first embodiment.
FIG. 3 is a schematic diagram showing other examples of a first physical quantity and a second physical quantity in the first embodiment.
FIG. 4 is a schematic diagram showing reference signals and reference signals generated by updating these reference signals in the first embodiment.
FIG. 5 is a schematic diagram showing an exemplary constellation of the signal points of the input signal, delayed signal, and reference signals.
FIG. 6 is a block diagram schematically showing the structure of a differential demodulation device according to a second embodiment.
FIG. 7 is a block diagram schematically showing the structure of a differential demodulation device according to a third embodiment.
FIG. 8 is a block diagram schematically showing the structure of a differential demodulation device according to a fourth embodiment.

## MODE FOR CARRYING OUT THE INVENTION

First Embodiment

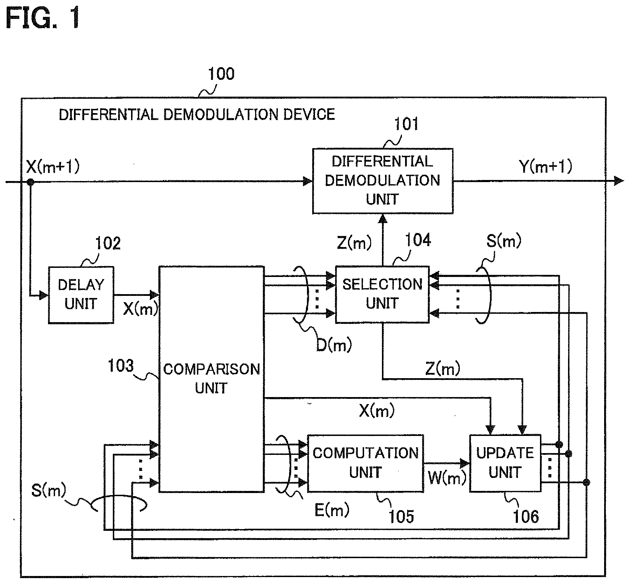

FIG. 1 is a block diagram schematically showing the structure of a differential demodulation device 100 according to a first embodiment. The differential demodulation device 100 according to the first embodiment is structured to efficiently suppress the effects of noise and phase rotation by referring to reference signals during differential demodulation, and can maintain high demodulation performance even in a very noisy environment. The differential demodulation device 100 is also structured to reduce the effect of cumulative phase rotation in the received signal by successively generating a weighting coefficient according to the reliability of the received signal, in other words, to the result of a comparison between the received signal and the reference signals, and using the generated weighting coefficient to update the reference signals.

As shown in FIG. 1, the differential demodulation device 100 includes a differential demodulation unit 101, a delay unit 102, a comparison unit 103, a selection unit 104, a computation unit 105, and an update unit 106. The differential demodulation device 100 demodulates a differentially modulated signal, more specifically, an input signal $X(m + 1)$ that is a modulated signal modulated by use of a differential angular shift modulation system, and outputs the result as an output signal $Y(m + 1)$. The symbol '$m$' denotes a natural number equal to or greater than one and indicates the units of time in which signal processing is performed.

The differential demodulation unit 101 uses the input signal $X(m + 1)$ and a comparison signal $Z(m)$ to detect a phase difference, and outputs the detected phase difference as an output signal $Y(m + 1)$. For example, the differential demodulation unit 101 detects the phase difference by a computation using the following equation (1). The symbol $\angle\{A\}$ denotes the argument of $A$, and $B^*$ denotes the complex conjugate signal of $B$.

$$Y(m + 1) = \angle\{X(m + 1)Z^*(m)\} \qquad\qquad : (1)$$

The delay unit 102 delays the input signal by a prescribed time to obtain a delayed signal. The delay unit 102 supplies the obtained delayed signal to the comparison unit 103. For example, when the input signal $X(m + 1)$ is received, the delay unit 102 outputs the input signal that preceded the input signal $X(m + 1)$ as the delayed signal $X(m)$. In this example, the delay unit 102 delays each input signal by the unit time in which a single input signal is processed.

The comparison unit 103 compares the delayed signal $X(m)$ with a reference signal $S(m)$ including one or more reference element signals $S_k(m)$, and computes physical quantities indicating the difference between the delayed signal $X(m)$ and each reference element signal $S_k(m)$ as a first physical quantity $D_k(m)$ and a second physical quantity $E_k(m)$. The comparison unit 103 supplies a first comparative signal $D(m)$ indicating the first physical quantity $D_k(m)$ for each reference element signal $S_k(m)$ to the selection unit 104, and supplies a second comparative signal $E(m)$ indicating the second physical quantity $E_k(m)$ for each reference element signal $S_k(m)$ to the computation unit 105. The symbol $k$ denotes a natural number, and if the total number of signal points used in the digital angular modulation scheme is $N$, the range of $k$ is preferably $1 \le k \le N$. Each reference element signal is obtained by cumulative addition of weighted delayed signals, and preferably indicates one of the estimated candidates for a delayed signal having no noise component that is not correlated with the channel environment.

To take one specific example, when DBPSK (Differential Binary Phase Shift Keying) is employed as the digital angular modulation scheme, $N = 2$ and the initial values $S_k(0)$ of the reference element signals included in the reference signal $S(m)$ can be set as $S_1(0) = 1$ ($\theta = 0$), and $S_2(0) = -1$ ($\theta = \pi$). The symbol $\theta$ denotes the initial phase of $S_k(0)$. To take another example, when DQPSK is employed as the digital angular modulation scheme, $N = 4$ and the initial values $S_k(0)$ of the reference element signals included in the reference signal $S(m)$ can be set as $S_1(0) = 1 + j$ ($\theta = \pi/4$), $S_2(0) = -1 + j$ ($\theta = 3\pi/4$), $S_3(0) = -1 - j$ ($\theta = 5\pi/4$), and $S_4(0) = 1 - j$ ($\theta = 7\pi/4$). The symbol j denotes the unit imaginary number. When digital angular modulation schemes other than the above are employed, the initial values $S_k(0)$ of the reference element signals can be similarly determined. A specific exemplary method of updating the reference signal $S(m)$ including one or more reference element signals $S_k(m)$ will be described below in the exemplary operation of the update unit 106.

If the number of initial values of the reference element signals is set equal to (or less than) the number of possible signal points of the modulated signal generated at the transmitting end in a wireless communication system, the initial values of the reference element signals are updated as described below and converge on a set of reference element signals adapted to the channel environment. The rate of convergence of the update process can be enhanced if the initial values of the reference element signals are the set of possible signal points of the modulated signal generated at the transmitting end in the wireless communication system.

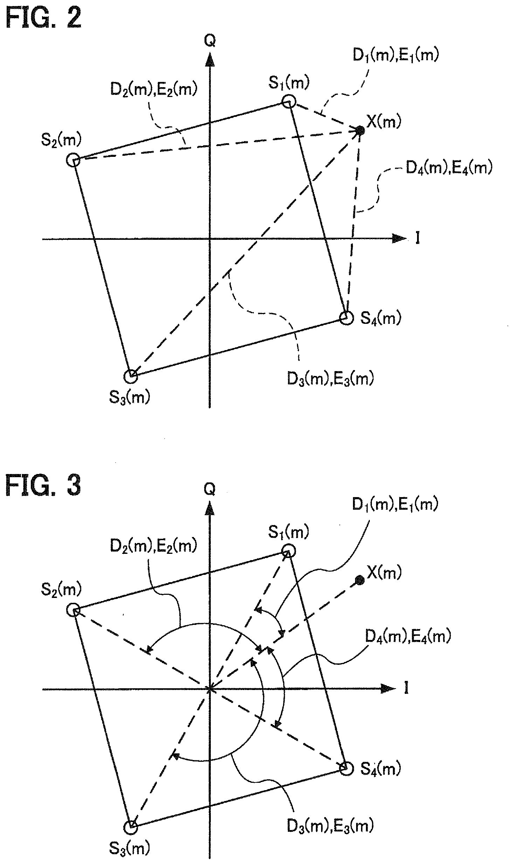

FIG. 2 is a schematic diagram showing examples of the first physical quantities $D_k(m)$ and the second physical quantities $E_k(m)$. As shown in FIG. 2, the comparison unit 103 can compute the Euclidean distance between the delayed signal $X(m)$ and each reference element signal $S_k(m)$ as the first physical quantity $D_k(m)$. The comparison unit 103 collects the Euclidean distances computed in the range $1 \le k \le 4$, and generates a first comparative signal $D(m)$ indicating these Euclidean distances. The comparison unit 103 can also compute the Euclidean distance between the delayed signal $X(m)$ and each reference element signal $S_k(m)$ as the second physical quantity $E_k(m)$. The comparison unit 103 collects the Euclidean distances computed in the range $1 \le k \le 4$, and generates a second comparative signal $E(m)$ indicating these Euclidean distances.

FIG. 3 is a schematic diagram showing other examples of the first physical quantities $D_k(m)$ and second physical quantities $E_k(m)$. As shown in FIG. 3, the comparison unit 103 can compute the phase difference between the delayed signal $X(m)$ and each reference element signal $S_k(m)$ as the first physical quantity $D_k(m)$. The comparison unit 103 collects the phase differences computed in the range $1 \le k \le 4$, and generates a first comparative signal $D(m)$ indicating these phase differences. The comparison unit 103 can also compute the phase difference between the delayed signal $X(m)$ and each reference element signal $S_k(m)$ as a second physical quantity $E_k(m)$. The comparison unit 103 collects the phase differences computed in the range $1 \le k \le 4$, and generates a second comparative signal $E(m)$ indicating these phase differences.

The first physical quantity $D_k(m)$, first comparative signal $D(m)$, second physical quantity $E_k(m)$, and second comparative signal $E(m)$ may be computed by using one of the methods shown in FIGs. 2 and 3.

Alternatively, the first physical quantity $D_k(m)$ and the first comparative signal $D(m)$ may be computed by using one of the methods shown in FIGs. 2 and 3, and the second physical quantity $E_k(m)$ and the second comparative signal

$E(m)$ may be computed by using the other method shown in FIGs. 2 and 3.

Furthermore, the first physical quantity $D_k(m)$, first comparative signal $D(m)$, second physical quantity $E_k(m)$, and second comparative signal $E(m)$ may be computed by using a method differing from the methods shown in FIGs. 2 and 3.

The comparison unit 103 supplies the delayed signal $X(m)$ supplied from the delay unit 102 to the update unit 106.

The selection unit 104 supplies the reference element signal $S_k(m)$ related to a single first physical quantity $D_k(m)$ selected from the first comparative signal $D(m)$ on the basis of a predetermined selection rule to the differential demodulation unit 101 and update unit 106 as the comparison signal $Z(m)$. For example, the selection unit 104 selects the first physical quantity $D_c(m)$ having the smallest absolute value from the set of the first physical quantities $D_k(m)$, and supplies the reference element signal $S_c(m)$ related the selected first physical quantity $D_c(m)$ to the differential demodulation unit 101 and update unit 106 as the comparison signal $Z(m)$. The symbol c denotes a natural number; the range of c is preferably $1 \leq c \leq N$.

The processing in the selection unit 104 described above can be represented by the following equations (2) and (3). The expression min{} denotes the smallest of the values included within the braces.

$$D_C(m) = \min\{D_1(m), D_2(m), ..., D_k(m), ..., D_N(m)\} \qquad : (2)$$

$$Z(m) = S_C(m) \qquad : (3)$$

The computation unit 105 calculates a weighting coefficient $W(m)$ by using the second physical quantities $E_k(m)$ included in the second comparative signal $E(m)$. For example, the computation unit 105 calculates a weighting coefficient $W(m)$ that depends on the reliability of a single second physical quantity $E_k(m)$ selected from the set of $N$ second physical quantities $E_k(m)$, or on a ratio of the reliability of this single second physical quantity $E_k(m)$ to the reliability of the $N$ second physical quantities $E_k(m)$. A specific description will be given below.

For example, the computation unit 105 may identify the second physical quantity $E_k(m)$ having the smallest absolute value in the set of $N$ second physical quantities $E_k(m)$ as the smallest second physical quantity, and calculate a weighting coefficient $W(m)$ proportional to the reciprocal of this smallest second physical quantity.

The above processing in the computation unit 105 can be represented by the following equation (4).

$$W(m) = A \times [\min\{E_1(m), E_2(m), ..., E_k(m), ..., E_N(m)\}]^{-1} \qquad : (4)$$

The symbol A is a proportionality constant. When the update unit 106 updates the reference signal $S(m)$ by using the weighting coefficient $W(m)$, the proportionality constant $A$ affects the updating process. More specifically, the smaller the value of $A$ is, the smaller the contribution ratio of the weighting coefficient $W(m)$ to the updating of the reference signal $S(m)$ becomes; the larger the value of $A$ is, the larger the contribution ratio becomes. The value of the proportionality constant $A$ may be selected arbitrarily on the basis of this contribution ratio.

As another example, the computation unit 105 may identify the second physical quantity $E_k(m)$ having the smallest absolute value in the set of N second physical quantities $E_k(m)$ as the smallest second physical quantity, and calculate a weighting coefficient $W(m)$ proportional to the ratio of the reciprocal of this smallest second physical quantity to the sum of the reciprocals of the $N$ second physical quantities $E_k(m)$.

The above processing in the computation unit 105 can be represented by the following equation (5). The expression $H_1(m)$ denotes the harmonic mean of the N second physical quantities $E_k(m)$.

$$W(m) = \frac{A \times H_1(m) \times [\min\{E_1(m), E_2(m), ..., E_k(m), ..., E_N(m)\}]^{-1}}{N} \qquad : (5)$$

As yet another example, the computation unit 105 may identify the second physical quantity $E_k(m)$ having the smallest absolute value in the set of $N$ second physical quantities $E_k(m)$ as the smallest second physical quantity, and calculate a weighting coefficient $W(m)$ proportional to the ratio of the reciprocal of this smallest second physical quantity to the sum of the reciprocals of i ($1 \leq i \leq N$) of the $N$ second physical quantities $E_k(m)$.

The above processing in the computation unit 105 can be represented by the following equation (6). The expression selmin{} denotes the smallest of $i$ values selected from the values included within the braces. The expression

$H_2(m)$ denotes the harmonic mean of the $i$ selected second physical quantities $E_k(m)$.

$$W(m) = \frac{A \times H_2(m) \times \left[sel\min\{E_1(m), E_2(m),...,E_k(m),...,E_N(m)\}\right]^{-1}}{i}$$

$$:(6)$$

The computation unit 105 can select the $i$ ($1 \le i \le N$) second physical quantities $E_k(m)$ by selecting second physical quantities $E_k(m)$ having absolute values equal to or less than a predetermined value (a third threshold value) from among the $N$ second physical quantities $E_k(m)$. Second physical quantities $E_k(m)$ having excessively large absolute values, in other words, an excessively large amount of error, can thereby be excluded, to reduce susceptibility to sudden bursts of noise and the like.

The computation unit 105 may also calculate the weighting coefficient $W(m)$ by using a method differing from equations (4), (5), and (6).

The computation unit 105 supplies the calculated weighting coefficient $W(m)$ to the update unit 106.

The update unit 106 supplies the reference signal $S(m)$ to the selection unit 104 and the comparison unit 103. The reference signal $S(m)$ is used in the processing of input signal $X(m + 1)$.

The update unit 106 uses the weighting coefficient $W(m)$ to update the reference signal $S(m)$, thereby generating a reference signal $S(m + 1)$. The reference signal $S(m + 1)$ is used for processing the input signal $X(m + 2)$ received after input signal $X(m + 1)$. For example, on the basis of the weighting coefficient $W(m)$, the update unit 106 computes an amplitude correction quantity and a phase correction quantity for updating the reference signal $S(m)$. The update unit 106 shifts all the amplitudes and phases of all the reference element signals $S_k(m)$ included in the reference signal $S(m)$ on the basis of the computed amplitude and phase correction quantities to update the reference signal $S(m)$.

For example, the update unit 106 uses the weighting coefficient $W(m)$, normalized so that $0 \le W(m) < 1$, to compute an amplitude correction quantity $\alpha(m)$ and a phase correction quantity $\beta(m)$ by internally dividing a line segment including the signal point of the delayed signal $X(m)$ and the signal point of the reference element signal $S_k(m)$ selected as the comparison signal $Z(m)$ in the ratio of $W(m):1 - W(m)$. More specifically, the update unit 106 can compute the amplitude correction quantity $\alpha(m)$ and the phase correction quantity $\beta(m)$ by using the following equation (7). The vertical lines (| |) indicate absolute values.

$$\begin{bmatrix} \alpha(m) \\ \beta(m) \end{bmatrix} = \begin{bmatrix} (1 - W(m)\,|\,Z(m)\,| + W(m)\,|\,X(m)\,| \\ W(m)\{\angle Z(m) - \angle X(m)\} \end{bmatrix} \qquad :(7)$$

The update unit 106 updates the reference signal $S(m)$ by using the following equations (8) and (9). The expression ABS{} denotes the absolute value of the value inside the braces.

$$\mathrm{ABS}\{S_k(m+1)\} = \alpha(m) \qquad\qquad :(8)$$

$$\angle\{S_k(m+1)\} = \angle\{S_k(m)\} - \beta(m) \qquad\qquad :(9)$$

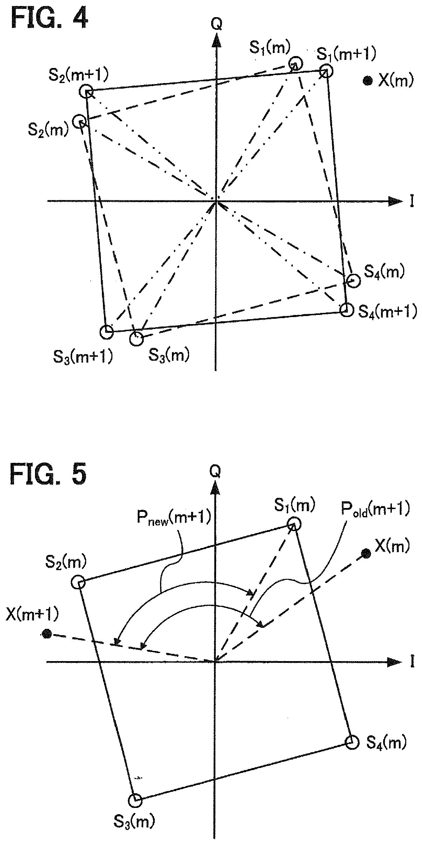

FIG. 4 is a schematic diagram showing the reference signal $S(m)$ and the reference signal $S(m + 1)$ generated by updating the reference signal $S(m)$. As shown in FIG. 4, the phase $S_k(m + 1)$ is obtained by updating the phase $S_k(m)$ on the basis of the phase correction quantity $\beta(m)$; the amplitude $S_k(m + 1)$ is obtained by updating the amplitude $S_k(m)$ on the basis of the amplitude correction quantity $\alpha(m)$. Because the update unit 106 applies the same amplitude and phase corrections to all the reference element signals $S_k(m)$, the constellation of signal points of the updated reference element signals $S_k(m + 1)$ remains similar to the constellation of signal points of the reference element signals $S_k(m)$ before the update.

The above update process positions the signal point of the updated reference element signal $S_1(m + 1)$ obtained by updating the reference element signal $S_1(m)$ selected as the comparison signal $Z(m)$ between the signal point of reference element signal $S_1(m)$ and the signal point of the delayed signal $X(m)$. As the weighting coefficient $W(m)$ increases in value, the delayed signal $X(m)$ increases in reliability, so the signal point of the updated reference element signal $S_1(m + 1)$ moves closer to the signal point of the delayed signal $X(m)$.

The update unit 106 may update the reference signal $S(m)$ by using a method differing from the above method, provided the method applies equal amplitude and phase corrections to all the reference element signals $S_k(m)$ on the basis of the weighting coefficient $W(m)$. As the initial value of the reference signal, the update unit 106 supplies the selection unit 104 and the comparison unit 103 with a predetermined signal: for example, a signal corresponding to an ideal set of signal points.

Use of the above differential demodulation device 100 makes it possible to generate the weighting coefficient $W(m)$ according to the reliability of the received signal, to successively correct the reference signal $S(m)$, and to maintain high demodulation performance by referring to this reference signal $S(m)$ during differential demodulation. The effects obtained by employing the first embodiment will now be described with reference to FIG. 5.

FIG. 5 is a schematic diagram showing an exemplary constellation of the signal points of the input signal $X(m + 1)$, delayed signal $X(m)$, and reference signal $S(m)$ in a case in which QPSK is employed as the digital angular modulation scheme.

In conventional differential demodulation, taking the phase difference between the input signal $X(m + 1)$ and the delayed signal $X(m)$ has been a common method. The phase angle $P_{old}(m + 1)$ in FIG. 5 is an exemplary result obtained by use of this common conventional differential demodulation method. Because both the input signal $X(m + 1)$ and the delayed signal $X(m)$ normally include thermal noise effects, there has been the problem that the DQPSK bit error rate is worse than the bit error rate for a QPSK signal, which uses an absolute phase reference.

When the differential demodulation device 100 in the first embodiment is used, in contrast, the reference element signal $S_k(m)$ closest to the delayed signal $X(m)$ is selected as the comparison signal $Z(m)$, and demodulation is carried out by taking the phase difference between the input signal $X(m + 1)$ and the comparison signal $Z(m)$. For example, the phase angle $P_{new}(m + 1)$ in FIG. 5 is the demodulation result when the differential demodulation device 100 in the first embodiment is used. The reference element signal $S_k(m)$ in this example has been cumulatively corrected on the basis of the signals received in the past. Because a small weighting coefficient is applied to a received signal that is estimated to be strongly affected by noise and phase rotation, and a large weighting coefficient is applied to a received signal that is estimated to be close to the ideal demodulation point, an accurate reference signal $S(m)$ can be obtained quickly and efficiently.

Because the differential demodulation device 100 according to the first embodiment carries out differential demodulation by using, instead of the delayed signal $X(m)$, a comparison signal $Z(m)$ selected from a set of the reference element signals $S_k(m)$ in which the effects of thermal noise are reduced, a feature of the differential demodulation device 100 is that it can use a pseudo absolute phase reference. A resulting effect is that it can outperform the theoretical DQPSK bit error rate obtained in conventional differential demodulation. Another effect is also obtainable: cumulative correction of the reference element signal $S_k(m)$ further reduces the effects of thermal noise and can improve the bit error rate to a level equivalent to the theoretical QPSK bit error rate.

Even in a mobile channel environment in which the amount of phase rotation varies with time, according to the differential demodulation device 100 in the first embodiment, the reference element signal $S_k(m)$ can track the temporal variations. The comparison signal $Z(m)$ selected from the set of the reference element signals $S_k(m)$ therefore also tracks the variations in the channel environment, so that differential demodulation results in which the effects of noise and phase rotation are efficiently suppressed can be obtained.

As described above, because the differential demodulation device 100 according to the first embodiment uses a weighting coefficient responsive to the result of a comparison between the received signal and the reference signals to update the reference signals, and can refer to these reference signals during differential demodulation, even in a very noisy environment, that is, even when the receiving electric field strength is lower than the noise power, and even in a mobile channel in which phase rotation varies over time, the amount of phase rotation can be accurately detected, and high demodulation performance can be maintained.

Second Embodiment

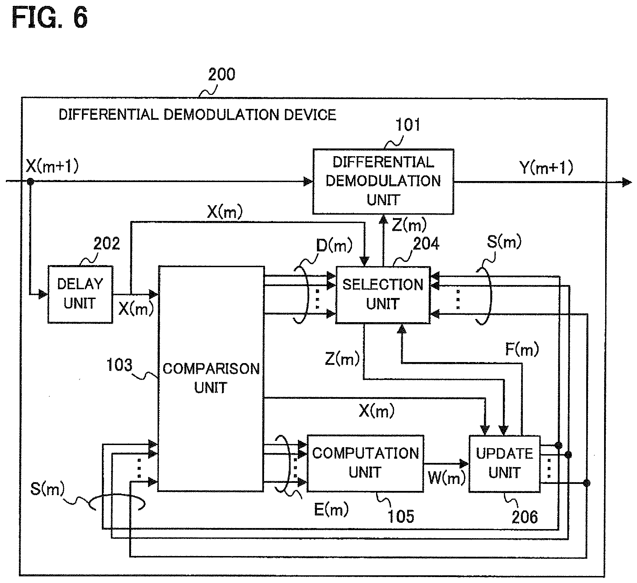

FIG. 6 is a block diagram schematically showing the structure of a differential demodulation device 200 according to a second embodiment. As shown in FIG. 6, the differential demodulation device 200 includes a differential demodulation unit 101, a delay unit 202, a comparison unit 103, a selection unit 204, a computation unit 105, and an update unit 206. The differential demodulation device 200 according to the second embodiment differs from the differential demodulation device 100 according to the first embodiment in regard to processing in the delay unit 202, selection unit 204, and update unit 206.

As the delayed signal, the delay unit 202 supplies the comparison unit 103 and selection unit 204 with a delayed input signal obtained by delaying the input signal by a prescribed time. For example, in FIG. 6, when input signal $X(m + 1)$ is received, the delay unit 202 supplies the comparison unit 103 and selection unit 204 with the input signal that preceded input signal $X(m + 1)$ as the delayed signal $X(m)$.

The selection unit 204 selects, on the basis of a predetermined selection rule, either the delayed signal $X(m)$

or the reference element signal $S_k(m)$ related to a single first physical quantity $D_k(m)$ selected from the first comparative signal $D(m)$. The selection unit 204 makes this selection in response to an update difference indicated by a selection control signal $F(m)$ supplied from the update unit 206, and supplies the selected signal to the differential demodulation unit 101 as the comparison signal $Z(m)$.

For example, the selection unit 204 first selects the first physical quantity $D_c(m)$ having the smallest absolute value from the set of first physical quantities $D_k(m)$, and identifies the reference element signal $S_c(m)$ related to the selected first physical quantity $D_C(m)$. Next, if the update difference indicated by the selection control signal $F(m)$ is equal to or less than a first predetermined value $R_1$ that functions as a first threshold, the selection unit 204 outputs this reference element signal $S_c(m)$ as the comparison signal $Z(m)$. If the update difference indicated by the selection control signal $F(m)$ is greater than the first predetermined value $R_1$, the selection unit 204 outputs the delayed signal $X(m)$ as the comparison signal $Z(m)$.

The above processing in the selection unit 204 is represented by equation (2) and the following equations (10) and (11).

$$Z(m) \ = \ S_C(m) \quad (F(m) \ \leq \ R_1) \qquad\qquad : (10)$$

$$Z(m) \ = \ X(m) \quad (F(m) \ > \ R_1) \qquad\qquad : (11)$$

The method by which the selection unit 204 selects one of the delayed signal $X(m)$ and the reference element signal $S_k(m)$ related to a single first physical quantity selected from the first comparative signal $D(m)$, on the basis of a predetermined selection rule responsive to the value of the selection control signal $F(m)$, may be a method other than the above.

The update unit 206 takes, as the update difference, a difference obtained when reference signal $S(m - 1)$ is updated to generate reference signal $S(m)$, and supplies the selection unit 204 with a selection control signal $F(m)$ indicating this update difference. The update unit 206 can use either the Euclidean distance or the phase difference between reference signal $S(m - 1)$ and reference signal $S(m)$ as the update difference.

Furthermore, the update unit 206 updates reference signal $S(m)$ by use of weighting coefficient $W(m)$ to generate reference signal $S(m + 1)$. Although the method described in the first embodiment may be used as the method of updating the reference signal $S(m)$, a method differing from the method used in the first embodiment may be used, provided the method applies equal amplitude and phase corrections to all the reference element signals $S_k(m)$ on the basis of the weighting coefficient $W(m)$.

Because the differential demodulation device 200 according to the second embodiment uses a weighting coefficient responsive to the result of a comparison between the delayed signal and the reference signals, updates the reference signals, generates a selection control signal, adaptively chooses between the delayed signal and the reference signal on the basis of this selection control signal, and can use the selected signal as the comparison signal during differential demodulation, differential demodulation can be carried out with consideration of the stability of the reference signals, and demodulation performance can be further improved.

Third Embodiment

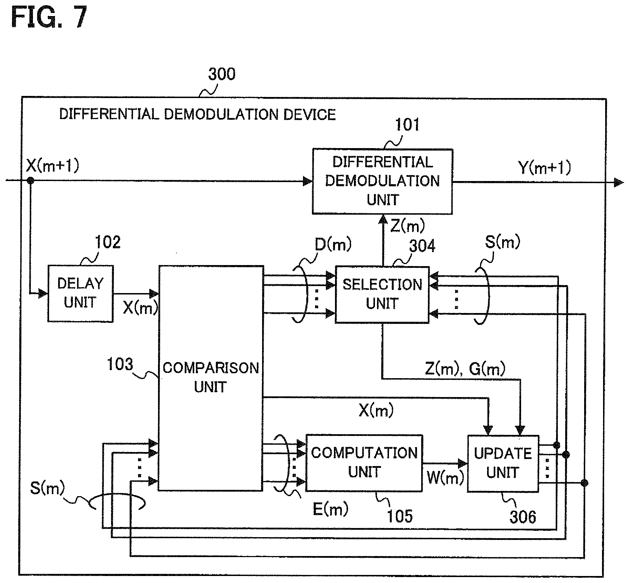

FIG. 7 is a block diagram schematically showing the structure of a differential demodulation device 300 according to a third embodiment. As shown in FIG. 7, the differential demodulation device 300 includes a differential demodulation unit 101, a delay unit 102, a comparison unit 103, a selection unit 304, a computation unit 105, and an update unit 306. The differential demodulation device 300 according to the third embodiment differs from the differential demodulation device 100 according to the first embodiment in regard to the processing in the selection unit 304 and update unit 306.

The selection unit 304 supplies the differential demodulation unit 101 with the reference element signal $S_k(m)$ related to a single first physical quantity $D_k(m)$ selected from the first comparative signal $D(m)$ on the basis of a predetermined selection rule as the comparison signal $Z(m)$. For example, the selection unit 304 first selects the first physical quantity $D_C(m)$ having the smallest absolute value from the set of first physical quantities $D_k(m)$, and then outputs the reference element signal $S_c(m)$ related to the selected first physical quantity $D_c(m)$ as the comparison signal $Z(m)$.

The selection unit 304 supplies the update unit 306 with an update control signal $G(m)$ indicating the magnitude of the comparison signal $Z(m)$. For example, the selection unit 304 generates an update control signal $G(m)$ indicating the amplitude value or power value of the comparison signal $Z(m)$, and supplies this update control signal $G(m)$ to the update unit 306. The comparison signal $Z(m)$ is not limited to these magnitude values, however.

The above processing in the selection unit 304 is represented by, for example, equations (2) and (3) and the

following equation (12).

$$G(m) = |Z(m)|^2 \qquad :(12)$$

The method of computing the update control signal $G(m)$ may be a method other than the above.

The update unit 306 supplies the reference signal $S(m)$ to the selection unit 304 and the comparison unit 103.

In response to the update control signal $G(m)$, the update unit 306 uses the weighting coefficient $W(m)$ to update the reference signal $S(m)$, thereby generating a reference signal $S(m + 1)$. For example, if the value indicated by the update control signal $G(m)$ is equal to or less than a second predetermined value $R_2$ that functions as a second threshold, the update unit 306 shifts all the amplitudes and phases of the reference element signals $S_k(m)$ included in the reference signal $S(m)$ by equal amounts on the basis of the weighting coefficient $W(m)$ to update the reference signal $S(m)$. When the update control signal $G(m)$ is greater than the second predetermined value $R_2$, the update unit 306 halts the updating of the reference signal $S(m)$.

The above processing in the update unit 306 is represented by, for example, equation (7) and the following equations (13) to (16).

$$\text{ABS}\{S_k(m + 1)\} = \alpha(m) \quad (G(m) \leq R_2) \qquad :(13)$$

$$\angle\{S_k(m + 1)\} = \angle\{S_k(m)\} - \beta(m) \; (G(m) \leq R_2) \qquad :(14)$$

$$\text{ABS}\{S_k(m + 1)\} = \text{ABS}\{S_k(m)\} \; (G(m) > R_2) \qquad :(15)$$

$$\angle\{S_k(m + 1)\} = \angle\{S_k(m)\} \; (G(m) > R_2) \qquad :(16)$$

The method of halting or resuming the updating of the reference signal $S(m)$ is not limited to the method above, provided the method refers to the update control signal $G(m)$. The content of the control scheme does not have to include halting and resumption of the update processing, provided the method refers to the update control signal $G(m)$ to control the updating of the reference signal $S(m)$.

Because the differential demodulation device 300 according to the third embodiment uses a weighting coefficient responsive to the result of a comparison between the received signal and the reference signals to update the reference signals, refers to one of these reference signals as the comparison signal during differential demodulation, and can adaptively halt or resume updating of the reference signal on the basis of an update control signal obtained from this comparison signal, even if unexpected fluctuations in the received signal occur, the updating of the reference signals can be kept stable and demodulation performance can be further improved.

Fourth Embodiment

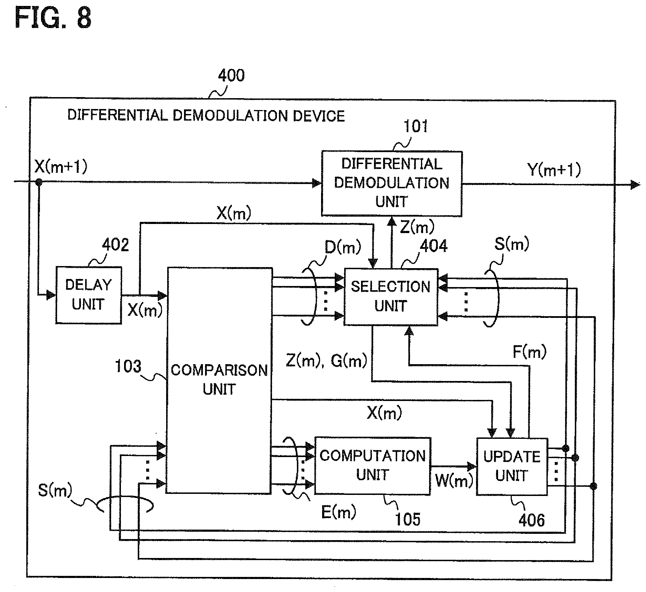

FIG. 8 is a block diagram schematically showing the structure of a differential demodulation device 400 according to a fourth embodiment. As shown in FIG. 8, the differential demodulation device 400 includes a differential demodulation unit 101, a delay unit 402, a comparison unit 103, a selection unit 404, a computation unit 105, and an update unit 406. The differential demodulation device 400 according to the fourth embodiment differs from the differential demodulation device 100 according to the first embodiment in regard to the processing in the delay unit 402, selection unit 404, and update unit 406.

As the delayed signal, the delay unit 402 supplies the comparison unit 103 and selection unit 404 with a delayed input signal obtained by delaying the input signal by a prescribed time. For example, in FIG. 8, when input signal $X(m + 1)$ is received, the delay unit 402 supplies the comparison unit 103 and selection unit 404 with the input signal that preceded input signal $X(m + 1)$ as the delayed signal $X(m)$.

The selection unit 404 selects, on the basis of a predetermined selection rule, either the delayed signal $X(m)$ or the reference element signal $S_k(m)$ related to a single first physical quantity $D_k(m)$ selected from the first comparative signal $D(m)$. The selection unit 404 makes this selection in response to an update difference indicated by a selection control signal $F(m)$ supplied from the update unit 406, and supplies the selected signal to the differential demodulation unit 101 as the comparison signal $Z(m)$. For example, the selection unit 404 first selects the first physical quantity $D_c(m)$ having the smallest absolute value from the set of first physical quantities $D_k(m)$, and identifies the reference element signal $S_c(m)$ related to the selected first physical quantity $D_C(m)$. Next, if the update difference indicated by the selection control signal $F(m)$ is equal to or less than a first predetermined value $R_1$, the selection unit 404 outputs this reference element signal $S_C(m)$ as the comparison signal $Z(m)$. If the update difference indicated by the selection control signal $F(m)$ is greater than the first predetermined value $R_1$, the selection unit 404 outputs the delayed signal $X(m)$ as the comparison signal $Z(m)$. The above processing in the selection unit 404 is represented by equations (2), (10), and (11). Alternatively, the selection unit 404 may use a method differing from the above to select one of the delayed signal $X(m)$ and the reference element signal $S_k(m)$ related to a single first physical quantity selected from the first comparative signal $D(m)$, on the basis of a predetermined selection rule responsive to the value of the selection control signal $F(m)$.

The selection unit 404 supplies the update unit 406 with an update control signal $G(m)$ indicating the magnitude of the comparison signal $Z(m)$. For example, the selection unit 404 generates an update control signal $G(m)$ indicating the amplitude value or power value of the comparison signal $Z(m)$, and supplies this update control signal $G(m)$ to the update unit 406. The comparison signal $Z(m)$ is not limited to these magnitude values, however. The above processing in the selection unit 404 is represented by, for example, equations (2), (3), and (12). The method of computing the update control signal $G(m)$ may also be a method other than the above. The reference signal $S(m)$ is used in the processing of input signal $X(m + 1)$.

The update unit 406 takes, as the update difference, a difference obtained when reference signal $S(m - 1)$ is updated to generate reference signal $S(m)$, and supplies the selection unit 404 with a selection control signal $F(m)$ indicating this update difference. The update unit 406 can use either the Euclidean distance or the phase difference between the reference signal $S(m - 1)$ and the reference signal $S(m)$ as the update difference.

In response to the update control signal $G(m)$, the update unit 406 uses the weighting coefficient $W(m)$ to update the reference signal $S(m)$, thereby generating a reference signal $S(m + 1)$. For example, if the value indicated by the update control signal $G(m)$ is equal to or less than a second predetermined value $R_2$, the update unit 406 shifts all the amplitudes and phases of the reference element signals $S_k(m)$ included in the reference signal $S(m)$ by equal amounts on the basis of the weighting coefficient $W(m)$ to update the reference signal $S(m)$. When the update control signal $G(m)$ is greater than the second predetermined value $R_2$, the update unit 406 halts the updating of the reference signal $S(m)$. The above processing in the update unit 406 is represented by, for example, equation (7) and equations (13) to (16).

The method of halting or resuming the updating of the reference signal $S(m)$ is not limited to the above, provided the method refers to the update control signal $G(m)$. The content of the control scheme may differ from halting and resumption of the update processing, provided the method refers to the update control signal $G(m)$ to control the updating of the reference signal $S(m)$.

Because the differential demodulation device 400 according to the fourth embodiment uses a weighting coefficient responsive to the result of a comparison between the received signal and the reference signals, updates the reference signals, generates a selection control signal, adaptively chooses between the delayed signal and the reference signal on the basis of this selection control signal, can use the selected signal as the comparison signal during differential demodulation, and can adaptively halt or resume updating of the reference signal on the basis of an update control signal obtained from this comparison signal, not only can differential demodulation be carried out in consideration of the stability of the reference signals, but in addition, even if unexpected fluctuations in the received signal occur, the updating of the reference signals can be kept stable and demodulation performance can be further improved.

An exemplary aspect of the invention applicable to a differential demodulation device is described in the first to fourth embodiments above, but the invention is not limited to this aspect. For example, the invention, which is defined and limited only by the scope of the appended claims, can be applied to a broadcast receiving device.

## REFERENCE CHARACTERS

100, 200, 300, 400: differential demodulation device, 101: differential demodulation unit, 102, 202, 402: delay unit, 103: comparison unit, 104, 204, 304, 404: selection unit, 105: computation unit, 106, 206, 306, 406: update unit.

## Claims

1. A differential demodulation device comprising:

    a delay unit (102, 202, 402) for delaying an input signal by a prescribed time to obtain a delayed signal;
    a comparison unit (103) for computing one or more physical quantities ($D_k(m)$, $E_k(m)$) indicating differences

between the delayed signal and one or more reference element signals ($S_k$(m)) indicating estimated candidates for the delayed signal; said differential demodulation device being **characterized in that** it further comprises:;
a selection unit (104, 204, 304, 404) for selecting, as a comparison signal, the reference element signal used in computing one of the physical quantities having the smallest absolute value;
a differential demodulation unit (101) for demodulating the input signal by use of a phase difference between the input signal and the comparison signal;
a computation unit (105) for using the at least one of the one or more physical quantities to calculate a weighting coefficient; and
an update unit (106, 206, 306, 406) for using the weighting coefficient to update the one or more reference element signals; wherein
each of the reference element signals is updated with reference to at least some of the one or more physical quantities.

2. The differential demodulation device of claim 1, wherein the comparison unit (103) computes, as the physical quantities, at least one of a Euclidean distance and a phase difference between the delayed signal and the reference element signals.

3. The differential demodulation device of claim 1 or 2, wherein the update unit (106, 206, 306, 406) updates the one or more reference element signals by positioning the signal point of the updated reference element signal obtained by updating the reference element signal corresponding to the comparison signal between the signal point of the delayed signal and the signal point of the comparison signal, the signal point being the point on phase plane, which is uniquely identified by referring to the amplitude and the phase of the signal.

4. The differential demodulation device of claim 3, wherein the update unit (106, 206, 306, 406) causes the signal point of the updated reference element signal obtained by updating the reference element signal corresponding to the comparison signal to approach the signal point of the delayed signal more closely as the weighting coefficient increases in value.

5. The differential demodulation device of any one of claims 2 to 4, wherein the update unit (206) computes an update difference indicating a difference between the reference element signal and the updated reference element signal, and
the selection unit (204):

   selects the reference element signal as the comparison signal when the update difference is equal to or less than a first threshold; and
   selects the delayed signal as the reference signal when the update difference is greater than the first threshold.

6. The differential demodulation device of any one of claims 2 to 4, wherein the update unit (306) updates the reference element signals when the comparison signal has a magnitude equal to or less than a second threshold.

7. The differential demodulation device of claim 6, wherein the update unit (406) computes an update difference indicating a difference between the reference element signal and the updated reference element signal, and
the selection unit (404):

   selects the reference element signal as the comparison signal when the update difference is equal to or less than a first threshold; and
   selects the delayed signal as the reference signal when the update difference is equal to or greater than the first threshold.

8. A differential demodulation method, comprising:

   a delay step for delaying an input signal by a prescribed time to obtain a delayed signal;
   a comparison step for computing one or more physical quantities ($D_k$(m), $E_k$(m)) indicating differences between the delayed signal and one or more reference element signals ($S_k$(m)) indicating estimated candidates for the delayed signal, said differential demodulation method being **characterized by**:

      a selection step for selecting, as a comparison signal, the reference element signal used in computing one of the physical quantities having the smallest absolute value;

a differential demodulation step for demodulating the input signal by use of a phase difference between the input signal and the comparison signal;

a computation step for using the at least one of the one or more physical quantities to calculate a weighting coefficient; and

an update step for using the weighting coefficient to update the one or more reference element signals, wherein

each of the reference element signals is updated with reference to at least some of the one or more physical quantities.

9. The differential demodulation method of claim 8, wherein the comparison step computes, as the physical quantities, at least one of a Euclidean distance and a phase difference between the delayed signal and the reference element signals.

10. The differential demodulation method of any one of claim 8 or 9, wherein the update step updates the one or more reference element signals by positioning the signal point of the updated reference element signal obtained by updating the reference element signal corresponding to the comparison signal between the signal point of the delayed signal and the signal point of the comparison signal, the signal point being the point on phase plane, which is uniquely identified by referring to the amplitude and the phase of the signal.

11. The differential demodulation method of any one of claim 9 or 10, wherein the update step computes an update difference indicating a difference between the reference element signal and the updated reference element signal, and

the selection step:

selects the reference element signal as the comparison signal when the update difference is equal to or less than a first threshold; and

selects the delayed signal as the reference signal when the update difference is greater than the first threshold.

12. The differential demodulation method of any one of claim 9 or 10, wherein the update step updates the reference element signals when the comparison signal has a magnitude equal to or less than a second threshold.

13. The differential demodulation method of claim 10, wherein the update step computes an update difference indicating a difference between the reference element signal and the updated reference element signal, and

the selection step:

selects the reference element signal as the comparison signal when the update difference is equal to or less than a first threshold; and

selects the delayed signal as the reference signal when the update difference is equal to or greater than the first threshold.

**Patentansprüche**

1. Differential-Demodulationsvorrichtung, umfassend:

eine Verzögerungseinheit (102, 202, 402) zum Verzögern eines Eingangssignals um eine vorgegebene Zeit, um ein verzögertes Signal zu erhalten;

eine Vergleichseinheit (103) zum Berechnen einer oder mehrerer physikalischer Größen ($D_k(m)$, $E_k(m)$), welche Differenzen zwischen dem verzögerten Signal und einem oder mehreren Referenzelementsignalen ($S_k(m)$), die geschätzte Kandidaten für das verzögerte Signal angeben, angeben; wobei die Differential-Demodulationsvorrichtung **dadurch gekennzeichnet ist, dass** sie weiter umfasst:

eine Auswahleinheit (104, 204, 304, 404) zum Auswählen, als ein Vergleichssignal, des beim Berechnen einer der physikalischen Größen verwendeten Referenzelementsignals mit dem kleinsten Absolutwert;

eine Differential-Demodulationseinheit (101) zum Demodulieren des Eingangssignals unter Verwendung einer Phasendifferenz zwischen dem Eingangssignal und dem Vergleichssignal;

eine Recheneinheit (105) zum Verwenden der zumindest einen der einen oder mehreren physikalischen Größen zum Berechnen eines gewichteten Koeffizienten; und eine Aktualisierungseinheit (106, 206, 306, 406) zur Verwendung des Gewichtungskoeffizienten zum Aktualisieren der einen oder mehreren Referenzelementsignale; wobei
jedes der Referenzelementsignale mit Bezugnahme auf zumindest einige der einen oder mehreren physikalischen Größen aktualisiert wird.

2. Differential-Demodulationsvorrichtung nach Anspruch 1, wobei die Vergleichseinheit (103) als die physikalischen Größen eine Euklidische Distanz oder/und eine Phasendifferenz zwischen dem verzögerten Signal und den Referenzelementsignalen berechnet.

3. Differential-Demodulationsvorrichtung nach Anspruch 1 oder 2, wobei die Aktualisierungseinheit (106, 206, 306, 406) das eine oder die mehreren Referenzelementsignale durch Positionieren des Signalpunkts des aktualisierten Referenzelementsignals, das durch Aktualisieren des Referenzelementsignals erhalten wird, welches dem Vergleichssignal zwischen dem Signalpunkt des verzögerten Signals und dem Signalpunkt des Vergleichssignals entspricht, aktualisiert, wobei der Signalpunkt der Punkt auf der Phasenebene ist, der eindeutig durch Bezugnahme auf die Amplitude und die Phase des Signals identifiziert wird.

4. Differential-Demodulationsvorrichtung nach Anspruch 3, wobei die Aktualisierungseinheit (106, 206, 306, 406) den Signalpunkt des aktualisierten Referenzelementsignals, welches durch Aktualisieren des dem Vergleichssignal entsprechenden Referenzelementsignals erhalten wird, veranlasst, sich dem Signalpunkt des verzögerten Signals näher anzunähern, wenn der Gewichtungskoeffizient im Wert ansteigt.

5. Differential-Demodulationsvorrichtung nach einem der Ansprüche 2 bis 4, wobei die Aktualisierungseinheit (206) eine Aktualisierungsdifferenz berechnet, welche eine Differenz zwischen dem Referenzelementsignal und dem aktualisierten Referenzelementsignal angibt, und
die Auswahleinheit (204):

das Referenzelementsignal als das Vergleichssignal auswählt, wenn die Aktualisierungsdifferenz gleich oder kleiner einem ersten Schwellenwert ist; und
das verzögerte Signal als das Referenzsignal auswählt, wenn die Aktualisierungsdifferenz größer als der erste Schwellenwert ist.

6. Differential-Demodulationsvorrichtung nach einem der Ansprüche 2 bis 4, wobei die Aktualisierungseinheit (306) die Referenzelementsignale aktualisiert, wenn das Vergleichssignal eine Größe gleich oder kleiner einem zweiten Schwellenwert aufweist.

7. Differential-Demodulationsvorrichtung nach Anspruch 6, wobei die Aktualisierungseinheit (406) eine Aktualisierungsdifferenz berechnet, welche eine Differenz zwischen dem Referenzelementsignal und dem aktualisierten Referenzelementsignal angibt, und die Auswahleinheit (404):

das Referenzelementsignal als das Vergleichssignal auswählt, wenn die Aktualisierungsdifferenz gleich oder kleiner einem ersten Schwellenwert ist; und
das verzögerte Signal als das Referenzsignal auswählt, wenn die Aktualisierungsdifferenz gleich oder größer als der erste Schwellenwert ist.

8. Differential-Demodulationsverfahren, umfassend:

einen Verzögerungsschritt zum Verzögern eines Eingangssignals um eine vorgegebene Zeit, um ein verzögertes Signal zu erhalten;
einen Vergleichsschritt zum Berechnen einer oder mehrerer physikalischer Größen ($D_k(m)$, $E_k(m)$), welche Differenzen zwischen dem verzögerten Signal und einem oder mehreren Referenzelementsignalen ($S_k(m)$) angeben, welche die geschätzten Kandidaten für das verzögerte Signal angeben, wobei das Differential-Demodulationsverfahren **gekennzeichnet ist durch**:

einen Auswahlschritt zum Auswählen, als einem Vergleichssignal, des beim Berechnen einer der physikalischen Größen verwendeten Referenzelementsignals mit dem kleinsten Absolutwert;
einen Differential-Demodulationsschritt zum Demodulieren des Eingangssignals unter Verwendung einer Phasendifferenz zwischen dem Eingangssignal und dem Vergleichssignal;
einen Rechenschritt zur Verwendung der zumindest einen der einen oder mehreren physikalischen Größen zum Berechnen eines Gewichtungskoeffizienten; und

eine Aktualisierungsschritt zur Verwendung des Gewichtungskoeffizienten zum Aktualisieren des einen oder mehrerer Referenzelementsignale, wobei

jedes der Referenzelementsignale unter Bezugnahme auf zumindest einige der einen oder mehreren physikalischen Größen aktualisiert wird.

9. Differential-Demodulationsverfahren nach Anspruch 8, wobei der Vergleichsschritt als die physikalischen Größen eine Euklidische Distanz oder/und eine Phasendifferenz zwischen dem verzögerten Signal und den Referenzelementsignalen berechnet.

10. Differential-Demodulationsverfahren nach einem der Ansprüche 8 oder 9, wobei der Aktualisierungsschritt das eine oder die mehreren Referenzelementsignale aktualisiert, durch Positionieren des Signalpunkts des aktualisierten Referenzelementsignals, welches durch Aktualisieren des Referenzelementsignals erhalten wird, welches dem Vergleichssignal zwischen dem Signalpunkt des verzögerten Signals und dem Signalpunkt des Vergleichssignals entspricht, wobei der Signalpunkt der Punkt auf der Phasenebene ist, der eindeutig durch Bezugnahme auf die Amplitude und die Phase des Signals identifiziert ist.

11. Differential-Demodulationsverfahren nach Anspruch 9 oder 10, wobei der Aktualisierungsschritt eine Aktualisierungsdifferenz berechnet, welche eine Differenz zwischen dem Referenzelementsignal und dem aktualisierten Referenzelementsignal angibt, und
der Auswahlschritt:

das Referenzelementsignal als das Vergleichssignal auswählt, wenn die Aktualisierungsdifferenz gleich oder kleiner einem ersten Schwellenwert ist; und

das verzögerte Signal als das Referenzsignal auswählt, wenn die Aktualisierungsdifferenz größer als der erste Schwellenwert ist.

12. Differential-Demodulationsverfahren nach Anspruch 9 oder 10, wobei der Aktualisierungsschritt das Referenzelementsignal aktualisiert, wenn das Vergleichssignal eine Größe gleich oder kleiner einem zweiten Schwellenwert aufweist.

13. Differential-Demodulationsverfahren nach Anspruch 10, wobei der Aktualisierungsschritt eine Aktualisierungsdifferenz berechnet, welche eine Differenz zwischen dem Referenzelementsignal und dem aktualisierten Referenzelementsignal angibt, und
der Auswahlschritt:

das Referenzelementsignal als das Vergleichssignal auswählt, wenn die Aktualisierungsdifferenz gleich oder kleiner einem ersten Schwellenwert ist; und

das verzögerte Signal als das Referenzsignal auswählt, wenn die Aktualisierungsdifferenz gleich oder größer dem ersten Schwellenwert ist.

**Revendications**

1. Dispositif de démodulation différentielle comprenant :

une unité de retard (102, 202, 402) pour retarder un signal d'entrée d'un temps prescrit afin d'obtenir un signal retardé ;
une unité de comparaison (103) pour calculer une ou plusieurs quantités physiques ($D_k(m)$, $E_k(m)$) indiquant des différences entre le signal retardé et un ou plusieurs signaux élémentaires de référence ($S_k(m)$) indiquant des candidats estimés pour le signal retardé ; ledit dispositif de démodulation différentielle étant **caractérisé en ce qu'**il comprend en outre :

une unité de sélection (104, 204, 304, 404) pour sélectionner, comme signal de comparaison, le signal élémentaire de référence utilisé dans le calcul d'une des quantités physiques ayant la valeur absolue la plus petite ;
une unité de démodulation différentielle (101) pour démoduler le signal d'entrée par utilisation d'une différence de phase entre le signal d'entrée et le signal de comparaison ;

une unité de calcul (105) pour utiliser la au moins une des une ou plusieurs quantités physiques pour calculer un coefficient de pondération ; et
une unité de mise à jour (106, 206, 306, 406) pour utiliser le coefficient de pondération afin de mettre à jour les un ou plusieurs signaux élémentaires de référence ; dans lequel :

chacun des signaux élémentaires de référence est mis à jour en se référant à au moins certaines des une ou plusieurs quantités physiques.

2. Dispositif de démodulation différentielle selon la revendication 1, dans lequel l'unité de comparaison (103) calcule, comme quantités physiques, au moins l'une parmi une distance euclidienne et une différence de phase entre le signal retardé et les signaux élémentaires de référence.

3. Dispositif de démodulation différentielle selon la revendication 1 ou 2, dans lequel l'unité de mise à jour (106, 206, 306, 406) met à jour les un ou plusieurs signaux élémentaires de référence en positionnant le point de signal du signal élémentaire de référence mis à jour obtenu par mise à jour du signal élémentaire de référence correspondant au signal de comparaison entre le point de signal du signal retardé et le point de signal du signal de comparaison, le point de signal étant le point, dans le plan de phase, qui est identifié de manière unique en se référant à l'amplitude et à la phase du signal.

4. Dispositif de démodulation différentielle selon la revendication 3, dans lequel l'unité de mise à jour (106, 206, 306, 406) amène le point de signal du signal élémentaire de référence mis à jour obtenu par mise à jour du signal élémentaire de référence correspondant au signal de comparaison à se rapprocher du point de signal du signal retardé plus étroitement à mesure que le coefficient de pondération augmente de valeur.

5. Dispositif de démodulation différentielle selon l'une quelconque des revendications 2 à 4, dans lequel l'unité de mise à jour (206) calcule une différence de mise à jour indiquant une différence entre le signal élémentaire de référence et le signal élémentaire de référence mis à jour, et
l'unité de sélection (204) :

sélectionne le signal élémentaire de référence comme signal de comparaison lorsque la différence de mise à jour est égale ou inférieure à un premier seuil ; et
sélectionne le signal retardé comme signal de référence lorsque la différence de mise à jour est supérieure au premier seuil.

6. Dispositif de démodulation différentielle selon l'une quelconque des revendications 2 à 4, dans lequel l'unité de mise à jour (306) met à jour les signaux élémentaires de référence lorsque le signal de comparaison a une amplitude égale ou inférieure à un second seuil.

7. Dispositif de démodulation différentielle selon la revendication 6, dans lequel l'unité de mise à jour (406) calcule une différence de mise à jour indiquant une différence entre le signal élémentaire de référence et le signal élémentaire de référence mis à jour, et
l'unité de sélection (404):

sélectionne le signal élémentaire de référence comme signal de comparaison lorsque la différence de mise à jour est égale ou inférieure à un premier seuil ; et
sélectionne le signal retardé comme signal de référence lorsque la différence de mise à jour est égale ou supérieure au premier seuil.

8. Procédé de démodulation différentielle, comprenant :

une étape de retard pour retarder un signal d'entrée d'un temps prescrit pour obtenir un signal retardé ;
une étape de comparaison pour calculer une ou plusieurs quantités physiques ($D_k(m)$, $E_k(m)$) indiquant des différences entre le signal retardé et un ou plusieurs signaux élémentaires de référence ($S_k(m)$) indiquant des candidats estimés pour le signal retardé ; ledit procédé de démodulation différentielle étant **caractérisé par** :

une étape de sélection pour sélectionner, comme signal de comparaison, le signal élémentaire de référence utilisé dans le calcul d'une des quantités physiques ayant la valeur absolue la plus petite ;
une étape de démodulation différentielle pour démoduler le signal d'entrée par utilisation d'une différence de phase entre le signal d'entrée et le signal de comparaison ;

une étape de calcul pour utiliser la au moins une des une ou plusieurs quantités physiques pour calculer un coefficient de pondération ; et

une étape de mise à jour pour utiliser le coefficient de pondération afin de mettre à jour les un ou plusieurs signaux élémentaires de référence, dans lequel

chacun des signaux élémentaires de référence est mis à jour en se référant à au moins certaines des une ou plusieurs quantités physiques.

9. Procédé de démodulation différentielle selon la revendication 8, dans lequel l'étape de comparaison calcule, comme quantités physiques, au moins l'une parmi une distance euclidienne et une différence de phase entre le signal retardé et les signaux élémentaires de référence.

10. Procédé de démodulation différentielle selon l'une quelconque des revendications 8 ou 9, dans lequel l'étape de mise à jour met à jour les un ou plusieurs signaux élémentaires de référence en positionnant le point de signal du signal élémentaire de référence mis à jour obtenu par mise à jour du signal élémentaire de référence correspondant au signal de comparaison entre le point de signal du signal retardé et le point de signal du signal de comparaison, le point de signal étant le point dans le plan de phase, qui est identifié de manière unique en se référant à l'amplitude et à la phase du signal.

11. Procédé de démodulation différentielle selon l'une quelconque des revendications 9 ou 10, dans lequel l'étape de mise à jour calcule une différence de mise à jour indiquant une différence entre le signal élémentaire de référence et le signal élémentaire de référence mis à jour, et

l'étape de sélection:

sélectionne le signal élémentaire de référence comme signal de comparaison lorsque la différence de mise à jour est égale ou inférieure à un premier seuil ; et

sélectionne le signal retardé comme signal de référence lorsque la différence de mise à jour est supérieure au premier seuil.

12. Procédé de démodulation différentielle selon l'une quelconque des revendications 9 ou 10, dans lequel l'étape de mise à jour met à jour les signaux élémentaires de référence lorsque le signal de comparaison a une amplitude égale ou inférieure à un second seuil.

13. Procédé de démodulation différentielle selon la revendication 10, dans lequel l'étape de mise à jour calcule une différence de mise à jour indiquant une différence entre le signal élémentaire de référence et le signal élémentaire de référence mis à jour, et

l'étape de sélection:

sélectionne le signal élémentaire de référence comme signal de comparaison lorsque la différence de mise à jour est égale ou inférieure à un premier seuil ; et

sélectionne le signal retardé comme signal de référence lorsque la différence de mise à jour est égale ou supérieure au premier seuil.

# FIG. 1

# FIG. 2

# FIG. 3

FIG. 4

FIG. 5

# FIG. 6

# FIG. 7

# FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5176007 A

**Non-patent literature cited in the description**

- **YOICHI SAITO.** Dejitaru Musen Tsushin no Henpukucho (Modulation and demodulation in digital wireless communication). *Corona,* February 1996, 233-242

- **FUMIYUKI ADACHI.** Adaptive Differential Detection Using Linear Prediction for M-ary DPSK. *IEEE TRANSACTIONS ON VEHICLUAR TECHNOLOGY,* 01 August 1998, vol. 47 (3